# EUROPÄISCHE PATENTSCHRIFT

(11) **EP 1 253 333 B1**
(45) Veröffentlichungstag und Bekanntmachung des Hinweises auf die Patenterteilung: **29.12.2004**
(21) Anmeldenummer: 02405288.8
(22) Anmeldetag: 11.04.2002
(51) Int. Cl.: F16B 15/00, F16B 19/14, B21G 3/16

(54) **Nagelförmiges Befestigungselement**
Nail-type fastener
Elément de fixation en forme de clou

(30) Priorität: 23.04.2001 DE 10119800
(43) Veröffentlichungstag der Anmeldung: 30.10.2002
(73) Patentinhaber: HILTI Aktiengesellschaft, 9494 Schaan (LI)
(72) Erfinder: Esser, Jens-Jörg, 6845 Hohenems (AT); Schlosser, Reimund, 6800 Feldkirch (AT); Binder, Dietmar, 6800 Feldkirch (AT); Durig, Markus, 6800 Feldkirch (AT); Kindle, Alexander, 9494 Schaan (LI)
(74) Vertreter: Wildi, Roland

(56) Entgegenhaltungen:
- EP-A- 1 057 553
- DE-A- 2 237 528
- DE-A- 4 135 500
- DE-B- 1 019 869
- DE-B- 1 181 139
- US-A- 1 697 810
- US-A- 2 212 787
- US-A- 5 127 785

## Beschreibung

Die Erfindung betrifft ein nagelförmiges Befestigungselement gemäss dem Oberbegriff des Patentanspruchs 1.

Aus der US-5 658 109 ist ein nagelförmiges Befestigungselement bekannt, dessen zylindrischer Schaft teilweise mit einer Oberflächenprofilierung in Form einer kreuzförmigen Randrierung versehen ist. Mit dieser Oberflächenprofilierung wird erreicht, dass Material des Untergrundes in die Vertiefungen der Oberflächenprofilierung fliesst und somit eine verbesserte Verbindung mit dem Befestigungselement in dem Untergrund gewährleistet.

Aus der US 5 127 785 ist ein nagelförmiges Befestigungselement mit einem balligen ersten, von der Spitze ausgehenden Abschnitt und mit einem sich an diesen anschliessenden zylindrischen zweiten Abschnitt bekannt. Auf der Oberfläche des Befestigungselementes ist vom ersten bis zum zweiten Abschnitt verlaufend eine gewindeförmige Oberflächenprofilierung angeordnet.

Aus der DE 41 35 500 A1 ist ein nagelförmiges Befestigungselement mit einem konischen Schaft und einer daran angeordneten ballistischen Spitze an einem Ende und einem Kopf am anderen Ende bekannt. An dem konischen Schaft ist dabei eine Oberflächenprofilierung in Form einer Randrierung angeordnet.

Aus der US 1 697 810 ist ein nagelförmiges Befestigungselement mit einem länglichen Schaft bekannt, an dessen einem Ende sich eine Spitze anschliesst und an dessen anderem Ende sich ein Kopf anschliesst. Zur Erhöhung der notwendigen Auszugskräfte eines derartigen nagelförmigen Befestigungselements weist dieses eine sandgestrahlte Oberfläche auf.

Aus der EP 1 057 553 A2 ist ein Herstellverfahren für ein Befestigungselement bekannt, bei dem an beiden Endbereichen eines die Länge von zwei Befestigungselementen übersteigenden Rohlings je ein Kopf angestaucht wird. Nach dem Erwärmen eines zwischen den beiden angestauchten Köpfen liegenden Abschnittes wird der Rohling dann bis zu seiner Trennung im erwärmten Abschnitt axial auseinandergezogen.

Der Erfindung liegt die Aufgabe zugrunde, ein schnell sowie sicher in einen Untergrund eintreibbares, nagelförmiges Befestigungselement zu schaffen, bei dem sich der setzrichtungsseitige Endbereich besonders gut mit dem Untergrund verbindet, damit dieses eine sehr grosse Haltekraft aufweist.

Die Lösung dieser Aufgabe erfolgt durch ein nagelförmiges Befestigungselement, welches die im kennzeichnenden Abschnitt des Patentanspruchs 1 angeführten Merkmale aufweist.

Da beim Eintreibvorgang des Befestigungselementes in einen harten Untergrund die Spitze mechanisch sehr stark beansprucht wird, ist es von Vorteil, wenn die Tiefe der Oberflächenprofilierung zur Spitze hin abnimmt. Die Tiefe der Oberflächenprofilierung beträgt im Bereich der Spitze 0,01 mm bis 0,2 mm und im gegenüberliegenden Endbereich 0,05 mm bis 0,8 mm.

Die Oberflächenprofilierung im ersten Abschnitt führt zu einer besonders guten Verbindung zwischen dem ersten Abschnitt und dem Untergrund. Dadurch ist es möglich, dass selbst Befestigungselemente mit einer sehr kurzen Baulänge sehr hohe Haltewerte in dem Untergrund erreichen können.

Damit diese gute Verbindung mit dem Untergrund insbesondere im Bereich der Spitze und in einem an die Spitze angrenzenden Bereich erzeugt werden kann, erstreckt sich die an dem ersten Abschnitt angeordnete Oberflächenprofilierung vorzugsweise wenigstens teilweise über den ersten Abschnitt. Die Oberflächenprofilierung kann dabei beispielsweise von der Spitze ausgehen.

Aus herstelltechnischen Gründen ist die Oberflächenprofilierung vorzugsweise von einer Randrierung gebildet. Bei dieser Randrierung kann es sich beispielsweise um eine Kreuzrandrierung oder eine Längsrandrierung handeln.

Eine Steigerung der Haltekraft des Befestigungselementes wird zweckmässigerweise dadurch erreicht, indem sich der an den ersten Abschnitt anschliessende zweite Abschnitt entgegen der Setzrichtung konisch erweitert.

Damit ein Eintreiben des Befestigungselementes in den Untergrund mit einer möglichst gleichbleibenden Eintreibenergie gewährleistet werden kann, ist der Übergangsbereich vorteilhafterweise vom ersten Abschnitt zum zweiten Abschnitt stufenlos ausgebildet.

Der sicheren Festlegung eines zu befestigenden Gegenstandes an einem Untergrund dient vorzugsweise ein als Kopf ausgebildeter dritter Abschnitt, der sich entgegen der Setzrichtung an den zweiten Abschnitt anschliesst. Dieser dritte Abschnitt weist beispielswiese eine konische Aussenkontur auf, wobei der Konuswinkel dieser konischen Aussenkontur grösser ist als der Konuswinkel der Aussenkontur des zweiten Abschnittes.

Eine grossflächige Abstützung des Kopfes an der von dem Untergrund abgewandten Oberfläche des zu befestigenden Gegenstandes wird erreicht indem der Kopf vorteilhafterweise zumindest ein Bereich des dritten Abschnittes die Aussenkontur des zweiten Abschnittes in radialer Richtung wenigstens teilweise überragt. Die grösste radiale Erstreckung des dritten Abschnittes besitzt die flanschartige Erweiterung, die beispielsweise an einem von der Setzrichtung abgewandten freien Endbereich des dritten Abschnittes angeordnet ist.

Das Herstellen dieser erfindungsgemässen Nägel erfolgt vorzugsweise durch ein Verfahren bei dem ein Rohling bereichsweise mit der Oberflächenprofilierung versehen wird, zumindest der profilierte Bereich erwärmt wird und durch anschliessendes Auseinanderziehen des erwärmten Bereiches die Spitze angeformt wird. Beim Auseinanderziehen des Bereiches verjüngt sich der erste Abschnitt unter einem Radius zu der Spitze und die in radialer Richtung gemessen Tiefe der Oberflächenprofilierung nimmt zur Spitze hin ab.

Die Erfindung wird anhand von Zeichnungen, die ein Ausführungsbeispiel wiedergeben, näher erläutert. Es zeigen:
- Fig.1: ein erfindungsgemässes Befestigungselement, dessen erster Abschnitt nur teilweise mit einer Oberflächenprofilierung versehen ist;
- Fig. 2: ein weiteres Befestigungselement, dessen erster Abschnitt zur Gänze mit einer Oberflächenprofilierung versehen ist;
- Fig. 3: ein weiteres Befestigungselement, dessen erster Abschnitt teilweise mit einer Oberflächenprofilierung versehen ist.

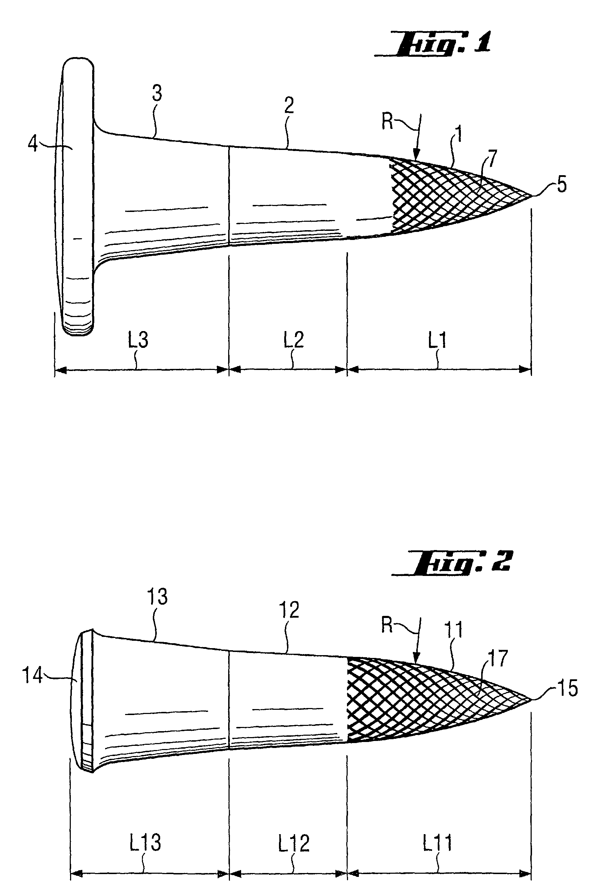

Die in den Fig. 1 bis 3 dargestellten Befestigungselemente weisen einen, sich in Setzrichtung unter einem Radius R zu einer Spitze 5, 15, 25 verjüngenden ersten Abschnitt 1, 11, 21, mit einer Länge L1, L11, L21, einen sich daran anschliessenden zweiten Abschnitt 2, 12, 22 mit einer Länge L2, L12, L22 und einen sich entgegen der Setzrichtung an den zweiten Abschnitt 2, 12, 22 anschliessenden Kopf in Form eines dritten Abschnitts 3, 13, 23 mit einer Länge L3, L13, L23 auf. Der erste Abschnitt 1, 11, 21 verjüngt sich unter einem Radius R zu einer Spitze 5, 15, 25. Die Übergangsbereiche vom ersten Abschnitt 1, 11, 21 zum zweiten Abschnitt 2, 12, 22 und vom zweiten Abschnitt 2, 12, 22 zum dritten Abschnitt 3, 13, 23 sind stufenlos ausgebildet.

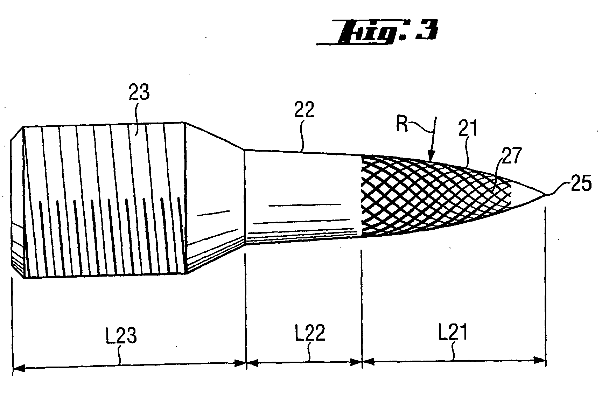

Der zweite Abschnitt 2, 12 und ein Teil des dritten Abschnitts 3, 13 der in Fig. 1 und 2 dargestellten Befestigungselemente erweitert sich konisch in einer entgegen der Setzrichtung verlaufenden Richtung. Der dritte Abschnitt 3, 13 weist einen grösseren Konuswinkel auf als der zweite Abschnitt 2, 12 und weist in seinem freien Endbereich beispielsweise eine flanschartige Erweiterung 4, 14 auf. Die flanschartige Erweiterung des in Fig. 1 dargestellten Befestigungselementes besitzt einen Aussendurchmesser, der beispielsweise im wesentlichen dem doppelten Durchmesser des restlichen Bereiches des dritten Abschnittes 3 entspricht. Das in Fig. 2 dargestellte Befestigungselement besitzt eine flanschartige Erweiterung 14, die den restlichen Teil des dritten Abschnitts 13 nur wenig überragt.

Das in Fig. 3 dargestellte Befestigungselement weist einen konischen zweiten Abschnitt 22 und einen mit einem Aussengewinde 28 versehenen dritten Abschnitt 23 auf, der den zweiten Abschnitt 22 in radialer Richtung deutlich überragt.

Wenigstens der erste Abschnitt 1, 11 ist zumindest teilweise mit einer Oberflächenprofilierung 7, 17 versehen. Die Oberflächenprofilierung 7 des in Fig. 1 dargestellten Befestigungelementes geht von der Spitze 5 aus und erstreckt sich nur zum Teil über den ersten Abschnitt 1. Fig. 2 zeigt ein Befestigungselement, bei dem der gesamte erste Abschnitt 11 mit einer Oberflächenprofilierung 17 versehen ist. Die Obeflächenprofilierung 27 des in Fig. 3 dargestellten Befestigungselementes beginnt in einem von der Spitze 25 beabstandeten Bereich des ersten Abschnittes 21 und erstreckt sich bis zum zweiten Abschnitt 22.

Die in einer im wesentlichen radialen Richtung gemessene Tiefe der Oberflächenprofilierung 7, 17, 27 nimmt erfindungsgemäß zur Spitze 5, 15, 25 hin ab. Die Tiefe der Oberflächenprofilierung 7, 17 beträgt erfindungsgemäß im Ubergangsbereich vom ersten Abschnitt 11 zum zweiten Abschnitt 12 0,05 mm bis 0,8 mm und im Bereich der Spitze 15 0,01 mm bis 0,2 mm. Die Oberflächenprofilierung 7, 17 wird beispielsweise von einer Randrierung gebildet.

## Patentansprüche

1. Nagelförmiges Befestigungselement mit einem ersten Abschnitt (1, 11, 21) und einem zweiten Abschnitt (2, 12, 22), der sich in einer von der Spitze (5, 15, 25) abgewandten Richtung an den ersten Abschnitt (1, 11, 21) anschliesst, wobei wenigstens der erste Abschnitt (1, 11, 21) wenigstens teilweise mit einer Oberflächenprofilierung (7, 17, 27) versehen ist,
**dadurch gekennzeichnet, dass** die Tiefe der Oberflächenprofilierung (7, 17, 27) zur Spitze (5, 15, 25) hin abnimmt und
dass die Tiefe der Oberflächenprofilierung (7, 17, 27) im Bereich der Spitze 0,01 mm bis 0,2 mm und im gegenüberliegenden Endbereich 0,05 mm bis 0,8 mm beträgt.

2. Befestigungselement nach Anspruch 1, **dadurch gekennzeichnet, dass** die Oberflächenprofilierung (7, 17, 27) von einer Randrierung gebildet ist.

3. Befestigungselement nach einem der Ansprüche 1 bis 2, **dadurch gekennzeichnet, dass** sich der an den ersten Abschnitt (1, 11, 21) anschliessende zweite Abschnitt (2, 12, 22) entgegen der Setzrichtung konisch erweitert.

4. Befestigungselement nach Anspruch 3, **dadurch gekennzeichnet, dass** der Übergangsbereich vom ersten Abschnitt (1, 11, 21) zum zweiten Abschnitt (2, 12, 22) stufenlos ausgebildet ist.

5. Befestigungselement nach einem der Ansprüche 1 bis 4, **dadurch gekennzeichnet, dass** sich entgegen der Setzrichtung an den zweiten Abschnitt (2, 12, 22) ein, als Kopf ausgebildeter dritter Abschnitt (3, 13, 23) anschliesst.

6. Befestigungselement nach Anspruch 5, **dadurch gekennzeichnet, dass** zumindest ein Bereich des dritten Abschnittes (3, 13, 23) die Aussenkontur des zweiten Abschnittes (2, 12) in radialer Richtung wenigstens teilweise überragt.

## Claims

1. Nailshaped fixing element comprising a first section (1, 11, 21) and a second section (2, 12, 22) adjacent to the first section (1, 11, 21) in a direction facing away from the tip (5, 15, 25), and at least the first section (1, 11, 21) is at least partially provided with a surface profile (7, 17, 27), **characterised in that** the depth of the surface profile (7, 17, 27) reduces towards the tip (5, 15, 25) and the depth of the surface profile (7, 17, 27) in the area of the tip lies between 0.01 and 0.2 mm and in the opposite end area between 0.05 and 0.8 mm.

2. Fixing element according to Claim 1, **characterised in that** the surface profile (7, 17, 27) is formed by a knurl.

3. Fixing element according to one of Claims 1 to 2, **characterised in that** the second section (2, 12, 22), which is adjacent the first section (1, 11, 21) conically widens against the setting direction.

4. Fixing element according to Claim 3, **characterised in that** the transitional area from the first section (1,11,21) to the second section (2, 12, 22) is designed to be without steps.

5. Fixing element according to one of Claims 1 to 4, **characterised in that** a third section (3, 13, 23) in the shape of a head is adjacent the second section (2, 12, 22), as seen against the setting direction.

6. Fixing element according to Claim 5, **characterised in that** at least a portion of the third section (3, 13, 23) partially protrudes over the outside contour of the second section (2, 12) in radial direction.

## Revendications

1. Élément de fixation en forme de clou avec une première portion (1, 11, 21) et une deuxième portion (2, 12, 22) qui se raccorde à la première portion (1, 11, 21) dans une direction orientée à l'opposé de la pointe (5, 15, 25), au moins la première portion (1, 11, 21) étant pourvue au moins en partie d'un profilage superficiel (7, 17, 27), **caractérisé en ce que** la profondeur du profilage superficiel (7, 17, 27) diminue en direction de la pointe (5, 15, 25), et **en ce que** la profondeur du profilage superficiel (7, 17, 27) est de 0,01 mm à 0,2 mm dans la zone de la pointe et de 0,05 mm à 0,8 mm dans la zone d'extrémité opposée.

2. Élément de fixation selon la revendication 1, **caractérisé en ce que** le profilage superficiel (7, 17, 27) est formé par un moletage.

3. Élément de fixation selon une des revendications 1 à 2, **caractérisé en ce que** la deuxième portion (2, 12, 22) raccordée à la première portion (1, 11, 21) s'élargit sous forme conique à l'opposé de la direction de scellement.

4. Élément de fixation selon la revendication 3, **caractérisé en ce que** la zone de transition de la première portion (1, 11, 21) à la deuxième portion (2, 12, 22) est conçue sans décrochement.

5. Élément de fixation selon une des revendications 1 à 4, **caractérisé en ce qu'**une troisième portion (3, 13, 23) conformée en tête se raccorde à la deuxième portion (2, 12, 22) à l'opposé de la direction de scellement.

6. Élément de fixation selon la revendication 5, **caractérisé en ce qu'**au moins une zone de la troisième portion (3, 13, 23) dépasse au moins en partie du contour extérieur de la deuxième portion (2, 12) dans la direction radiale.
